Europäisches Patentamt

European Patent Office

Office européen des brevets

(19)

(11) EP 0 649 863 B1

(12) EUROPÄISCHE PATENTSCHRIFT

(45) Veröffentlichungstag und Bekanntmachung des Hinweises auf die Patenterteilung:
24.04.1996 Patentblatt 1996/17

(51) Int Cl.⁶: **C08F 214/26**

(21) Anmeldenummer: 94116301.6

(22) Anmeldetag: 17.10.1994

(54) **Herstellung eines modifizierten Polytetrafluorethylens und seine Verwendung**

Preparation of a modified polytetrafluoroethylene and use thereof

Préparation d'un polytétrafluoréthylène modifié et son utilisation

(84) Benannte Vertragsstaaten:
**BE DE FR GB IT NL**

(30) Priorität: 20.10.1993 DE 4335705

(43) Veröffentlichungstag der Anmeldung:
26.04.1995 Patentblatt 1995/17

(73) Patentinhaber: HOECHST AKTIENGESELLSCHAFT
D-65926 Frankfurt am Main (DE)

(72) Erfinder:
• Felix, Bernd, Dr.
  D-84508 Burgkirchen (DE)
• Hintzer, Klaus Dr.
  D-84556 Kastl (DE)
• Löhr, Gernot, Dr.
  D-84508 Burgkirchen (DE)

(56) Entgegenhaltungen:
EP-A- 0 170 382        US-A- 4 078 134
US-A- 4 262 101

**Beschreibung**

Die Erfindung bezieht sich auf ein Verfahren zur Herstellung eines mit Perfluoralkylvinylether(PAVE)-Einheiten modifizierten Polytetrafluorethylens (PTFE) und dessen Verwendung für die Vorform-Freisintertechnik. "Modifiziertes" PTFE heißt, daß das Tetrafluorethylen(TFE)-Polymere relativ geringe Anteile an Ether-Einheiten enthält, nämlich meist unter 0,1 Mol-%, und daß das Copolymere - wie das homopolymere PTFE - nicht aus der Schmelze verarbeitbar ist. Andererseits muß der Gehalt an Ether-Einheiten im Polymer so hoch sein, daß die Kristallisationsneigung aus der Schmelze gehemmt und der Amorph-Anteil innerhalb gewisser Grenzen erhöht wird. Hierdurch werden die guten mechanischen Eigenschaften wie Reißfestigkeit und Reißdehnung des unmodifizierten PTFE schon bei deutlich niedrigeren Molgewichten erreicht.

Die niedrigeren Molgewichte der modifizierten Produkte zeigen sich in einer Schmelzviskosität nach Ajroldi (US-A 3 855 191, Spalte 8) von etwa 1 bis 100 GPas, während die Schmelzviskosität der unmodifizierten Polymeren bei vergleichbar guten mechanischen Eigenschaften mehr als 300 GPas beträgt.

Durch diese drastische Herabsetzung der Schmelzviskosität werden die Eigenschaften der aus diesen modifizierten Formpulvern hergestellten Formteile verbessert. Da die Teilchen des Formpulvers leichter verschmelzen, enthalten die Formteile weniger Poren und dadurch eine verbesserte elektrische Durchschlagsfestigkeit, außerdem wird die Kriechfestigkeit nahezu verdoppelt. Vor allem aber wird die Verschweißbarkeit der Formteile erheblich verbessert.

Wie vorstehend bereits erwähnt bezieht sich die Erfindung auch auf die Verwendung des modifizierten PTFE für die Vorform-Freisintertechnik. Hierfür ist eine gute Mahlbarkeit des Rohpolymeren unerläßlich. Im Gegensatz dazu werden für die Ram-Extrusion ein hartes, also schlecht mahlbares Korn und eine gute Rieselfähigkeit gefordert.

Aus der EP-A-0 170 382 ist es bekannt, ein PAVE-modifiziertes PTFE nach dem Dispersions-beziehungsweise Emulsions-Polymerisationsverfahren herzustellen. Hierbei erhält man ein feines Pulver mit einer Teilchengröße von 0,1 bis 0,5 µm. Dieses Produkt eignet sich für die Pastenextrusion, nicht jedoch für die Sintertechnik

Die Erfindung betrifft ein Verfahren zur Herstellung von Polymeren des TFE mit einem Gehalt von 0,02 bis 0,25 Gew.-% PAVE-Einheiten mit 1 bis 4 C-Atomen in der Perfluoralkylkette, das dadurch gekennzeichnet ist, daß man die Monomeren nach dem Suspensionsverfahren im wäßrigen Medium mit einem Mangan in einer höheren Oxidationsstufe enthaltenden Initiator bei einer Temperatur unter 60 °C polymerisiert. Für die erfindungsgemäße Verwendung wird das so erhaltene Rohpolymerisat auf eine mittlere Teilchengröße von 10 bis 50 µm gemahlen.

Als PAVE ist der Perfluor-n-propylvinylether, im folgenden PPVE, bevorzugt.

Die Polymerisationstemperatur liegt vorzugsweise in einem Bereich von 10 bis 50 °C, der Polymerisationsdruck im Bereich von 4 bis 25 bar, insbesondere 5 bis 15 bar.

Als Initiatoren kommen Salze der Permangan-, Mangan- und der manganigen Säure in Betracht. Bevorzugt sind die Permanganate, vor allem die Alkalipermanganate. Sie werden vorteilhaft in Kombination mit einem löslichen Oxalat wie Ammoniumoxalat oder einem Alkalioxalat eingesetzt.

Weitere bevorzugte Ausgestaltungen der Erfindung werden im folgenden näher erläutert.

Die Herstellung von Copolymeren mit TFE- und PAVE-Einheiten mit Permanganat und ähnlichen Initiatoren ist bereits bekannt. So wird nach der US-A 4 262 101 ein Terpolymer durch Copolymerisation von TFE mit 1 bis 6 Mol-% PAVE und 5 bis 25 Mol-% Hexafluorpropen in Gegenwart eines Kettenübertragungsmittels hergestellt. Die Polymerisationstemperatur kann 10 bis 150 °C, vorzugsweise 10 bis 50 °C, betragen. Das so gewonnene Terpolymer ist aus der Schmelze verarbeitbar.

Nach der US-A 4 078 134 wird TFE mit nur sehr geringen Mengen PAVE, nämlich 0,0004 bis 0,0029 Mol-%, polymerisiert. Die bevorzugte Polymerisationstemperatur liegt bei 10 bis 35 °C, bei den Beispielen mit Kaliumpermanganat als Initiator bei 15 beziehungsweise 25 °C. Die so erhaltenen Produkte unterscheiden sich sowohl vom nicht modifizierten PTFE als auch von den Produkten mit höheren Anteilen an Modifizierungsmittel, nämlich über 0,0029 Mol-% (Spalte 4, Zeilen 18 bis 68). Sie sind für die Herstellung von Formkörpern durch Verformung, Sintern und insbesondere Ram-Extrusion geeignet. Sie können folglich die speziellen Anforderungen, die heute an ein Formpulver für die Vorform-Freisintertechnik gestellt werden, nicht erfüllen.

Die Herstellung eines mit PAVE modifizierten TFE-Polymeren, das für die Vorform-Freisintertechnik geeignet ist, ist aus der US-A 3 855 191 bekannt. Hier erfolgt die Polymerisation bei 50 bis 100 °C, wobei anorganische Persulfate als Initiatoren bevorzugt sind. Redox-Initiatorsysteme werden zwar genannt, Salze von Mangansäuren aber nicht erwähnt. Der gewünschte niedrige Amorph-Anteil von unter 8 Gew.-%, vorzugsweise unter 6,5 Gew.-%, wird durch den Einsatz eines nicht telogen wirkenden fluorierten Dispergiermittels erreicht. Es wurde aber gefunden, daß diese Dispergiermittel besonders bei tieferen Temperaturen, wie sie erfindungsgemäß angewendet werden, zu Verklumpungen während der Polymerisation führen. Eine kontrollierte Reaktionsführung bis zu einem erwünschten Feststoffgehalt von etwa 30 Gew.-% ist damit nicht mehr gewährleistet.

Es wurde weiterhin gefunden, daß die genannten Verklumpungen beim Einsatz der fluorierten Dispergiermittel besonders bei niedrigerem Salzgehalt in der Polymerisationsflotte auftreten. Das erfindungsgemäße Verfahren erlaubt jedoch niedrige Salzgehalte, die nicht nur die Abwasserentsorgung vereinfacht, sondern auch einen positiven Einfluß auf die Produkteigenschaften haben.

Bei der erfindungsgemäß durchgeführten Polymerisation wird ein Rohpolymerisat erhalten, das sehr gut mahlbar ist. Die erheblich verbesserte Mahlbarkeit zeigt sich in einem mehr als verdoppelten Durchsatz und/oder einer geringeren Energieaufnahme der Mühle.

Es wurde weiterhin gefunden, daß die leichte Mahlbarkeit der Rohpolymerisate mit vorteilhaften mechanischen und elektrischen Eigenschaften gekoppelt ist. Die so erhaltenen Formpulver zeichnen sich durch eine hohe Verpreßbarkeit beziehungsweise Deformierbarkeit aus. Darunter versteht man die Änderung der gravimetrisch bestimmten Dichten des unter verschieden hohen Drücken verpreßten Formpulvers ohne Sinterung, also in Form des sogenannten Grünlings (US-A 3 245 972, Spalte 2, Zeilen 28 bis 37). Mit steigender Verpreßbarkeit oder Deformierbarkeit verbessern sich die technischen Eigenschaften des gesinterten Materials, weil dadurch der Kontakt zwischen den einzelnen Partikeln besser gewährleistet ist.

Die aus den erfindungsgemäß erhaltenen Produkten hergestellten Formkörper zeichnen sich durch eine Kombination wertvoller Eigenschaften aus, nämlich insbesondere eine hohe Reißfestigkeit bei guter Reißdehnung und hohe elektrische Durchschlagfestigkeit.

Für die gute Mahlbarkeit und auch für die verbesserten Eigenschaften der Endprodukte dürfte ein verbesserter Kornaufbau des Polymeren maßgeblich sein. Dieser zeigt sich in einer drastischen Zunahme der spezifischen Oberfläche. Es wurde gefunden, daß diese Kornverbesserung durch relativ hohe TFE-Drücke, beispielsweise im Bereich von 15 bis 25 bar, signifikant in der gewünschten Richtung beeinflußt wird. Aus technischen Gründen wird aber ein Druckbereich von 5 bis 15 bar bevorzugt, da ein hoher TFE-Druck zu einem höheren Verlust des kostspieligen PAVE führt und außerdem bei hohen Drücken das systemimmanente Verpuffungsrisiko erhöht ist.

Die gewünschte Beeinflußung des Kornaufbaus wird erfindungsgemäß vor allem durch die niedrigen Polymerisationstemperaturen erzielt. Wie erwähnt, ist auch ein niedriger Salzgehalt im Polymerisationsmedium vorteilhaft. Bei dem erfindungsgemäß verwendeten Initiator kann die Polymerisationstemperatur bis auf etwa 10 °C erniedrigt werden, ohne daß die Raum-Zeit-Ausbeute (bei vergleichbarem Molgewicht und gleichem Modifizierungsgrad) in unvertretbarer Weise abnimmt. Dies ist insofern überraschend, als die Polymerisation durch PAVE erheblich verlangsamt wird.

Die erfindungsgemäßen Initiatoren haben eine stark temperaturabhängige Zerfallsgeschwindigkeit. Es wird deshalb mit fallender Polymerisationstemperatur ein zunehmender Anteil der Initiator-Gesamtmenge bei Polymerisationsbeginn vorgelegt und der Rest, vorzugsweise kontinuierlich über die gesamte Polymerisationsdauer, zudosiert. Die Zudosierung wird vorteilhaft so gesteuert, daß die Polymerisationsgeschwindigkeit bei zeitlich konstanter Einbaurate des PAVE nicht abfällt.

Die Polymerisation kann auch nach dem aus der US-A 5 153 285 bekannten Verfahren durchgeführt werden, bei dem vor der Polymerisation eine Mischung von TFE und Inertgas aufgepreßt wird und der Gesamtdruck der aufgepreßten Mischung 5 bis 50 bar beträgt, wobei die Konzentration des TFE in dieser Mischung bei 30 bis 70 Mol-% liegt und durch entsprechende Nachspeisung während der Polymerisation in diesem Bereich gehalten wird.

Wird ein rieselfähiges Produkt gewünscht, so kann das erfindungsgemäß erhaltene gemahlene Produkt in bekannter Weise granuliert werden. Geeignet ist das aus der US-A 4 439 385 bekannte Agglomerationsverfahren.

Die Erfindung wird in den folgenden Beispielen näher erläutert. Prozentangaben beziehen sich auf das Gewicht.

Beispiele

In einen 150-l-Kessel werden 100 l entionisiertes Wasser eingefüllt und die in Tabelle 1 angegebene Menge an Ammoniumoxalat (AmOx) zugegeben. Der Kesselinhalt wird durch abwechselndes Evakuieren und Stickstoffspülen vom Luftsauerstoff befreit. TFE wird auf 10 bar aufgepreßt und der Gesamtdruck durch Aufdrücken von Stickstoff auf 15 bar erhöht. Dieser Druck wird durch Nachdosieren von TFE über die gesamte Polymerisationszeit konstant gehalten. Die in Tabelle 1 angegebene Menge an PPVE wird in den Kessel dosiert und der Kesselinhalt auf die in Tabelle 1 angegebene Temperatur gebracht. Diese Temperatur wird ebenfalls über die gesamte Polymerisationsdauer konstant gehalten. Die Polymerisation wird durch rasches Zudosieren (innerhalb von 5 Minuten) der in Tabelle 1 unter "Start" angegebenen Menge an Kaliumpermanganat, gelöst in 300 ml Wasser, in Gang gebracht. Die Reaktion springt praktisch augenblicklich an. Nach etwa 20 Minuten werden kontinuierlich eine wäßrige Lösung der in der Tabelle 1 angegebenen Menge an Kaliumpermanganat sowie die weitere Menge an PPVE zudosiert.

Nach Erreichen der gewünschten Einfahrmenge TFE wird die Reaktion beendet, indem die Initiator-, PPVE- und TFE-Dosierung unterbrochen wird. Nach etwa weiteren 20 Minuten erniedrigt sich der Druck auf etwa 6 bar. Der Kesselinhalt wird dann auf Raumtemperatur abgekühlt und durch mehrmaliges Evakuieren weitgehend von den Restmonomeren befreit.

Das erhaltene Produkt wird dreimal mit entionisiertem Wasser gewaschen, 10 Stunden bei 220 °C getrocknet und in einer Spiralstrahlmühle gemahlen. Die mittlere Teilchengröße $d_{50}$ des gemahlenen Produktes liegt bei etwa 20 µm. Die weiteren Eigenschaften des gemahlenen Pulvers sind in der Tabelle 1 angegeben. Diese Eigenschaften wurden wie folgt bestimmt:

Der Amorph-Anteil wird IR-spektroskopisch durch Messung der Absorption bei 778 und 2353 cm$^{-1}$ nach der in der US-A 3 855 191, Spalte 5 angegebenen Methode an 100-µm-Folien bestimmt.

Der PPVE-Gehalt wird ebenfalls IR-spektroskopisch an 100-µm-Folien durch Messung der Absorption bei 995 und 2353 cm$^{-1}$ nach der Beziehung % PPVE-Gehalt = 0,95 . $A_{995}/A_{2353}$ bestimmt.

Die spezifische Oberfläche wird durch Messung der Stickstoff-Adsorption nach der von F. M. Nelson und F. T. Eggertson [Anal. Chem. 30, 1387 (1958)] beschriebenen Methode bestimmt.

Die Mahlbarkeit in der Spiralstrahlmühle des Rohpolymerisats wurde anhand der Durchsatzmenge pro Stunde bei einem Mahlluftdruck von 6 bar und bei gleichem Anteil der Partikel über 33 µm, gemessen durch Aussiebung, charakterisiert.

Das in Tabelle 1 angegebene Molgewicht (Zahlenmittel) wurde unter der plausiblen Annahme, daß der eingesetzte Initiator unter den angeführten Reaktionsbedingungen praktisch quantitativ umgesetzt wird, nach der folgenden Beziehung abgeschätzt:

$$M_n = 2 \cdot 100 \cdot m_p / l_0 \, ,$$

wobei $m_p$ die umgesetzte TFE-Menge in mol, $l_0$ die eingesetzte Initiatormenge in mol, der Faktor 100 das Molgewicht von TFE ist und der Faktor 2 für einen Kombinationsabbruch steht.

Die SSG-Dichte wird nach ASTM-Prüfnorm D-1457-69 bestimmt.

Die Tabelle 1 zeigt weiterhin unter "Endeigenschaften" die Reißfestigkeit (RF), die Reißdehnung (RD) und die elektrische Durchschlagsfestigkeit (EDF). Diese Eigenschaften werden an Folien ermittelt, die wie folgt hergestellt werden:

a)     Waschen des Rohpolymerisats mit deionisiertem Wasser,
b)     Vortrocknen im Wirbelbett bei Temperaturen bis 130 °C,
c)     Nachtrocknen über 4 Stunden bei 220 °C,
d)     Mahlen in einer Luftstrahlmühle auf einen $d_{50}$-Wert von etwa 20 µm,
e)     Verpressen bei 350 bar zu einem zylindrischen, 13 kg schweren Block von je etwa 208 mm Höhe und Durchmesser,
f)     Sintern bei 380 °C nach einem Temperaturprogramm und
g)     Schälen einer Folie von 100 µm Dicke in 200-µm-Schritten.

Aus der mittleren Zone des Blocks werden Proben der 100 µm dicken Folien zur Bestimmung der Reißfestigkeit und -dehnung nach DIN 53455 (Streifenmethode) und der elektrischen Durchschlagsfestigkeit nach DIN 53481 verwendet.

Die Tabelle 2 zeigt Vergleichsbeispiele. Da bei Temperaturen ab 60 °C die Zerfallsgeschwindigkeit der erfindungsgemäß eingesetzten Initiatoren so hoch wird, daß eine gut reproduzierbare Polymerisation nur schwierig zu realisieren ist, wurde als Initiator Ammoniumpersulfat (APS) eingesetzt. Als Puffersubstanz diente neben Ammoniumoxalat auch Ammoniumcarbonat (AmCb). Zur Abschätzung des Molgewichts wurde die folgende Beziehung benutzt:

$$M_n = 100 \cdot m_p / [l_0 (1 - e^{-kd.t})]$$

wobei $m_p$ die umgesetzte TFE-Molmenge, $l_0$ die eingesetzte Initiatormenge in mol, $k_d$ die Zerfallskonstante von Ammoniumpersulfat und t die Polymerisationsdauer bedeuten. Es wird bei dieser Beziehung unterstellt, daß das Persulfat in zwei Starterradikale zerfällt.

Für die Zerfallskonstante $k_d$ wurde ein Wert von 1,2 10$^{-5}$ sec$^{-1}$ bei 70 °C beziehungsweise 0,5 10$^{-5}$ sec$^{-1}$ bei 63 °C eingesetzt [I. M. Kolthoff, I. H. Miller, J. Am. Chem. Soc. 37 (1951) 3055).

Ein Vergleich der Durchschnittswerte aus den Tabellen 1 und 2 ergibt folgendes Eigenschaftsprofil:

Das Produkt des erfindungsgemäßen Verfahrens zeichnet sich bei vergleichbarem Molgewicht und Modifizierungsgrad durch eine deutlich höhere spezifische Oberfläche, durch eine drastisch verbesserte Mahlbarkeit, durch eine um 30 % erhöhte elektrische Durchschlagsfestigkeit und durch eine um 10 N/mm$^2$ angestiegene Reißfestigkeit bei nur geringfügig erniedrigter Reißdehnung aus.

Tabelle 1

| Bei-spiel | Verfahrensparameter | | | | | | | | Pulvereigenschaften | | | | | Endeigenschaften | | | |
|---|---|---|---|---|---|---|---|---|---|---|---|---|---|---|---|---|---|
| | Tempe-ratur [°C] | AmOx [g] | $KMnO_4$ Start [mg] | $KMnO_4$ nach-dosiert [mg] | TFE [kg] | PPVE-Vorlage [g] | Zudosier-rate [g] PPVE/[kg] TFE | Lauf-zeit [h] | PPVE-Einbau [%] | Amorph-Anteil [%] | Spezifi-sche Ober-fläche [m²/g] | Mahlbar-keit [kg/h] | $M_n \times 10^{-7}$ [g/mol] | SSG-Dichte [g/cm³] | RF [N/mm²] | RD [%] | EDF [kV/mm] |
| 1 | 55 | 1,5 | 50 | 780 | 42,0 | 30,0 | 2,5 | 3,9 | 0,08 | 5,4 | 4,3 | 10 | 1,6 | 2,177 | 45,8 | 635 | 119 |
| 2 | 55 | 1,5 | 35 | 800 | 50,0 | 35,0 | 2,0 | 5,4 | 0,07 | 3,6 | 3,7 | 12 | 1,9 | 2,163 | 46,4 | 665 | 121 |
| 3 | 40 | 1,5 | 30 | 780 | 50,7 | 30,0 | 2,5 | 5,3 | 0,09 | 5,9 | 2,7 | 11 | 2,0 | 2,159 | 44,0 | 605 | 130 |
| 4 | 40 | 1,5 | 40 | 820 | 51,3 | 30,0 | 2,5 | 5,2 | 0,10 | 6,0 | 2,9 | 12 | 1,9 | 2,158 | 43,6 | 590 | 120 |
| 5 | 40 | 3,0 | 40 | 620 | 51,0 | 30,0 | 2,5 | 4,0 | 0,08 | 5,9 | 3,2 | 13 | 2,5 | 2,160 | 42,2 | 615 | 129 |
| 6 | 40 | 1,5 | 300 | 570 | 52,5 | 70,0 | 1,0 | 4,5 | 0,09 | 6,2 | 3,1 | 12 | 1,9 | 2,162 | 47,3 | 625 | 130 |
| 7 | 40 | 1,5 | 300 | 520 | 52,4 | 70,0 | 1,0 | 4,8 | 0,08 | 6,3 | 3,3 | 14 | 2,0 | 2,161 | 48,2 | 640 | 139 |
| 8 | 40 | 1,5 | 70 | 800 | 48,4 | 60,0 | 2,0 | 5,0 | 0,08 | 5,7 | 2,9 | 11 | 1,8 | 2,163 | 42,4 | 670 | 120 |
| 9 | 35 | 1,5 | 20 | 730 | 50,8 | 30,0 | 2,5 | 5,1 | 0,09 | 5,7 | 3,3 | 11 | 2,2 | 2,157 | 51,5 | 595 | 138 |
| 10 | 35 | 5,0 | 30 | 910 | 51,7 | 45,0 | 2,5 | 4,9 | 0,10 | 6,8 | 3,4 | 12 | 1,8 | 2,161 | 46,5 | 625 | 130 |
| 11 | 20 | 1,5 | 300 | 570 | 52,0 | 60,0 | 2,5 | 5,1 | 0,09 | 7,6 | 3,8 | 10 | 1,9 | 2,155 | 48,9 | 555 | 134 |

Tabelle 2

| Vergleichs-beispiel | Verfahrensparameter | | | | | | | Pulvereigenschaften | | | | | | Endeigenschaften | | |
|---|---|---|---|---|---|---|---|---|---|---|---|---|---|---|---|---|
| | Tempe-ratur [°C] | Puffer-substanz Menge/Art | APS [g] | TFE [kg] | PPVE-Vorlage [g] | Zudosier-rate [g] PPVE/ [kg] TFE | Lauf-zeit [h] | PPVE-Einbau [%] | Amorph-Anteil [%] | Spezifi-sche Ober-fläche [$m^2$/g] | Mahlbar-keit [kg/h] | $M_n$ x $10^{-7}$ [g/mol] | SSG-Dichte [g/$cm^3$] | RF [N/$mm^2$] | RD [%] | EDF [kV/mm] |
| 1 | 70 | 10 g/AmCb | 5,0 | 50 | 35,0 | 1,7 | 5,3 | 0,09 | 5,8 | 1,4 | 5,3 | 1,3 | 2,171 | 35,6 | 675 | 94 |
| 2 | 70 | 20 g/AmCb | 5,0 | 50 | 70,0 | 0,6 | 5,2 | 0,10 | 6,3 | 1,5 | 5,5 | 1,3 | 2,17 | 36,1 | 655 | 98 |
| 3 | 70 | 20 g/AmCb | 4,0 | 50 | 60,0 | 0,7 | 5,2 | 0,10 | 6,1 | 1,4 | 5,1 | 1,7 | 2,169 | 34,8 | 695 | 95 |
| 4 | 70 | 3,2 g/AmOx | 3,8 | 50 | 35,0 | 1,7 | 5,0 | 0,09 | 7,1 | 1,5 | 4,3 | 1,8 | 2,17 | 32,8 | 705 | 99 |
| 5 | 70 | 7,5 g/AmOx | 4,6 | 50 | 70,0 | 0,6 | 5,0 | 0,10 | 7,7 | 1,5 | 4,1 | 1,5 | 2,173 | 36,6 | 690 | 101 |
| 6 | 63 | 7,0 g/AmOx | 7,6 | 50 | 60,0 | 0,7 | 4,7 | 0,11 | 7,8 | 1,3 | 5,0 | 1,9 | 2,171 | 35,4 | 720 | 99 |
| 7 | 63 | 7,0 g/AmOx | 7,6 | 50 | 35,0 | 1,7 | 4,7 | 0,09 | 7,6 | 1,4 | 4,8 | 1,9 | 2,169 | 37,3 | 665 | 97 |
| 8 | 63 | 7,5 g/AmOx | 7,6 | 50 | 70,0 | 0,6 | 4,7 | 0,12 | 7,5 | 1,3 | 5,1 | 1,9 | 2,164 | 34,5 | 690 | 103 |

# EP 0 649 863 B1

**Patentansprüche**

1. Verfahren zur Herstellung eines Polymeren des Tetrafluorethylens mit einem Gehalt an 0,02 bis 0,25 Gew.-% an Einheiten eines Perfluoralkylvinylethers mit 1 bis 4 C-Atomen in der Perfluoralkylkette, dadurch gekennzeichnet, daß man die Monomeren im wäßrigen Medium nach dem Suspensionsverfahren bei Temperaturen unter 60 °C mit dem Salz einer Säure, die Mangan in einer höheren Oxidationsstufe enthält, als Initiator polymerisiert.

2. Verfahren nach Anspruch 1, dadurch gekennzeichnet, daß als Initiator die Salze der Permangansäure benutzt werden.

3. Verfahren nach Anspruch 1 oder 2, dadurch gekennzeichnet, daß als Ether der Perfluor-n-propylvinylether eingesetzt wird.

4. Verfahren nach einem oder mehreren der vorhergehenden Ansprüche, dadurch gekennzeichnet, daß das Rohpolymerisat auf eine mittlere Teilchengröße von 10 bis 50 µm gemahlen wird.

5. Verfahren nach Anspruch 4, dadurch gekennzeichnet, daß das gemahlene Produkt granuliert wird.

6. Verwendung der nach Anspruch 4 oder 5 erhaltenen Produkte in der Vorform-Freisintertechnik.

**Claims**

1. A process for preparing a polymer of tetrafluoroethylene containing from 0.02 to 0.25% by weight of units of a perfluoro(alkyl vinyl ether) having from 1 to 4 carbon atoms in the perfluoroalkyl chain, which comprises polymerizing the monomers in aqueous medium by the suspension process at temperatures below 60°C using the salt of an acid containing manganese in a higher oxidation state as initiator.

2. The process as claimed in claim 1, wherein the salts of permanganic acid are used as initiator.

3. The process as claimed in claim 1 or 2, wherein perfluoro(n-propyl vinyl ether) is used as ether.

4. The process as claimed in one or more of the preceding claims, wherein the raw polymer is milled to an average particle size of from 10 to 50 µm.

5. The process as claimed in claim 4, wherein the milled product is granulated.

6. Use of products obtained by the process as claimed in claim 4 or 5 in the preform free-sintering technique.

**Revendications**

1. Procédé pour la préparation d'un polymère du tétrafluoréthylène ayant une teneur de 0,02 à 0,25 % en poids en motifs d'un éther perfluoroalkylvinylique avec 1 à 4 atomes de carbone dans la chaîne perfluoroalkyle, caractérisé en ce qu'on polymérise les monomères en milieu aqueux selon le procédé en suspension, à des températures inférieures à 60 °C, avec le sel d'un acide contenant du manganèse ayant un degré d'oxydation plus élevé, en tant qu'amorceur.

2. Procédé selon la revendication 1, caractérisé en ce qu'on utilise en tant qu'amorceurs des sels d'acide permanganique.

3. Procédé selon la revendication 1 ou 2, caractérisé en ce qu'on utilise en tant qu'éther l'éther perfluoro-n-propylvinylique.

4. Procédé selon une ou plusieurs des revendications précédentes, caractérisé en ce qu'on broie le polymère brut à une granulométrie moyenne de 10 à 50 µm.

5. Procédé selon la revendication 4, caractérisé en ce qu'on granule le produit broyé.

7

**6.** Utilisation selon l'une des revendications 4 ou 5 du produit obtenu selon la technique de frittage à l'air libre des préformés.